# EUROPEAN PATENT APPLICATION

(11) **EP 2 772 510 A1**
(43) Date of publication of application: **03.09.2014**
(21) Application number: 13157288.5
(22) Date of filing: 28.02.2013
(51) Int. Cl.: C08K 5/00, C08K 5/101, C08L 23/06

(54) **Antistatic ultra high molecular weight polyethylene**

(71) Applicant: QUADRANT EPP AG, 5600 Lenzburg (CH)
(72) Inventor: The designation of the inventor has not yet been filed
(74) Representative: Schmauder & Partner AG Patent- & Markenanwälte VSP

(57) **Abstract**

White or near-white antistatic ultra-high molecular weight polyethylene (UHMWPE) is obtained by consolidating a mixture of UHMWPE powder and an organic antistat at high pressure and elevated temperature. The organic antistat is preferably a non-ionic solid which has been cryogenically ground to fine particle size.

## Description

### BACKGROUND OF THE INVENTION

### 1. Field of the Invention

The invention pertains to ultrahigh molecular weight polyethylene with antistatic properties.

### 2. Description of the Related Art

Ultrahigh molecular weight polyethylene (UHMWPE) is a unique thermoplastic. Due to its very high molecular weight, UHMWPE is very unlike other polyethylene polymers, for example, linear high density polyethylene. Other polyethylenes can be thermoplastically processed in the molten state, for example by injection molding, extrusion, etc. However, UHMWPE must be processed from powder precursor by compression molding, or by RAM extrusion as disclosed in U.S. Patents 5,286,576, 5,422,061, 3,883,631, 3,887,319, and co-assigned 7,803,450.

Like many other non-polar polymers, UHMWPE can build up static electrical charges. These charges are in general quite undesirable and may influence the processing of UHMWPE itself, as well as objects associated with the UHMWPE, for example when chutes, slides, conveyors are made of UHMWPE, or when the latter is used as a friction reducing, high strength component in machine tools and the like. Static electricity buildup can be fatal to assembly of electronic devices.

Carbon black is a well-known antistatic agent, but its use in thermoplastics is limited to applications where a dark gray to black product can be tolerated.

In conventional thermoplastics such as polyethylene and polypropylene, ionic antistats like long-chain alkyl quaternary ammonium and phosphonium salts are used as migratory antistats which migrate or "bloom" to the surface. The hydrophilic portion of these antistats attracts water molecules from the atmosphere which then dissipate electrostatic charge. However, in order to function, migration is necessary, and as expected, antistatic properties may vary considerably over time. In addition, the presence of such antistats at the surface of the polymer may be counter-indicated in some applications such as in the medical field and food processing. These antistats thus share some of the deficiencies of external antistats which are applied to the surface of a polymer, by spraying, wiping, or dipping. Quaternary ammonium salts may be used in such applications, for example, whereas their use as internal, migratory antistats is only acceptable in polymers with low melt temperatures and low melt viscosities, due to thermal decomposition. Because of the unique properties and processing constraints of UHMWPE, the use of antistats which are effective for other thermoplastics does not extend to UHMWPE.

Non-ionic polyoxyethylated fatty amines have also been used as internal, migratory antistats, and may provide long duration antistatic properties in polyethylene and polypropylene polymers. Other common antistats such as glycerol monostearate, however, can only be used as antistats during polymer processing (blowing, molding, extrusion, etc.), since even though quite migratory, sustained antistatic properties cannot be achieved.

So-called "permanent antistats" are a relatively recent development. These antistats are relatively insensitive to humidity, and exhibit long term performance with minimal surface contamination. Such permanent antistats have been proposed in the form of very hydrophilic polymers and inherently conductive polymers. The disadvantages of such antistats are their high cost, reduced stability at elevated temperatures, and incompatibility with many polymers.

UHMWPE, as indicated previously, is a rather unique material which cannot be processed by ordinary techniques such as injection molding or extrusion. UHMWPE is consolidated in continuous processes by ram extrusion, wherein UHMWPE powder is introduced into the extruder opening, is rammed into the extrusion cavity under high pressure, entering a heating zone, is heated to relatively high temperature, and is consolidated within the ram extruder as the material travels between the entrance and the exit die. In batch processes (compression molding), the powder is generally filled into a very robust, "coffin-type" mold having a robust top which can progress downwardly into the mold recess. These molds are heated, which in turn heats the UHMWPE powder to high temperature, and at the same time, the molds are compressed hydraulically such that the lids descend, placing high pressure on the resin. In this process, large blocks of UHMWPE are formed, which can be sliced into panels, machined into parts, etc. In both processes, the temperature and pressure are high, and consolidation occurs through coalescence of particles in the gel state, somewhat similar to sintering. There is very low mixing in such processes, in contrast to ordinary polymers such as polyethylene, which is processed as a liquid. This low mixing prevents uniform incorporation of antistats. Thus, due the processing constraints of UHMWPE, numerous antistats are unsuitable, or produce a highly colored product. Although carbon black can be used to produce a dark gray or black product, in many application areas, a light colored product is desired. For the latter, white is preferred, although light shades of color which appear substantially white to the eye can be tolerated. Further distancing in color from white, however, for example, as visually yellow or gray, are often viewed, as in other industries, as a sign of imperfection. Thus, it would be desirable to obtain a white or only slightly colored antistatic UHMWPE.

In DE 20 2006 004 690 U1, antistatic high molecular weight polyethylene and UHMWPE are disclosed which incorporate titania (TiO₂) as an antistat, in conjunction with tin oxide or diantimony pentoxide. While titania is white, only limited antistatic properties are obtained when used alone. In addition, since titania is a very hard material, abrasion of the ram extrusion apparatus necessarily occurs, especially when used in amounts which provide significant antistatic properties. Tin and antimony oxides are softer materials, but their inclusion with titania, as taught by DE 20 2006 004 690 U1 produces a grey product. These latter materials are available commercially as "S" PLUS + BRIGHT ESD" from Murtfeldt GmbH & Co., D-44291 Dortmund, Federal Republic of Germany.

It would be desirable to provide antistats for UHMWPE which are organic in nature, which are not abrasive, and which enable the production of UHMWPE by ram extrusion or batch processes, which is white or of a very light color. It would be further desirable to provide antistats which exhibit, in UHMWPE, a resistivity of less than about 10¹¹Ω/cm² (ohms per square), this low resistivity enduring for lengthy periods of time. The normal resistivity of UHMWPE is in the range of 10¹⁵-10¹⁶ Ω/square.

### SUMMARY OF THE INVENTION

It has now been surprisingly discovered that certain organic compounds can provide significant antistatic properties to UHMWPE without undue coloration, and also that other organic compounds which, when added to UHMWPE prior to processing in molten or granular form fail to provide effective antistatic properties, will do so when cryogenically ground or otherwise processed to very small particle size.

### DETAILED DESCRIPTION OF THE PREFERRED EMBODIMENT(S)

UHMWPE is defined herein as polyethylene which has a weight average molecular weight greater than about 500,000 g/mol, more preferably greater than 1,000,000 g/mol, and most preferably in the range of 1,000,000 g/mol to 2,500,000 g/mol. Such UHMWPE is available in the form of UHMWPE powder from Ticona and other suppliers.

UHMWPE as processed by ram extrusion or batch consolidation generally has a surface resistivity of 10¹⁵-10¹⁶Ω/square as measured in accordance with ASTM D257-99 (November, 1999). To be considered antistatic herein, the surface resistivity must be less than 10¹¹ Ω/square, most preferably in the range of 10⁵ -1¹⁰Ω/square.

In the practice of the invention, the antistat is blended uniformly with UHMWPE powder by conventional methods known to the art. In these methods, the antistat may be added in liquid form, i.e., neat or dissolved in solvent, or in solid form as a powder. When added as a powder, cryogenically ground powder is preferred, and such very fine particle form is necessary for some antistats. If added in solution form, the solvent should be removed prior to consolidation to prevent formation of voids, and also to negate formation of VOCs during processing.

The amount of antistat employed depends upon the nature of the particular antistat and the necessary retained physical properties of the UHMWPE, and is an amount sufficient to provide a resistivity of less than 10¹¹Ω/square, preferably less than 10¹⁰Ω/square, more preferably from 1·10⁵ to 9-10¹⁰Ω/square, and most preferably, 1·10⁵ to 5.0-10⁹Ω/square. These amounts generally range from 1 weight percent to about 50 weight percent, more preferably 1 weight percent to 25 weight percent, yet more preferably 2.5 weight percent to 20 weight percent, and most preferably about 3 weight percent to about 15 weight percent, these weight percentages based upon the finished weight of the UHMWPE product. Low amounts are particularly preferred, for example in the range of 1 to 10 weight percent, more preferably 1 to 5 weight percent. At high loadings of >50 weight percent, considerable loss of physical properties of the UHMWPE are observed, while at loadings less than that which provides a resistance> 10¹¹Ω/square, antistatic properties are inadequate.

The antistats may also be supplied as a so-called "master batch", a pulverulent mixture of UHMWPE powder, antistat, and optionally other ingredients such as thermal and UV-stabilizers, processing aids such as waxes or lubricants, dyes, pigments, etc. When dyes or pigments are added, the color of the UHMWPE product will be other than white or near-white, and may, in fact, be highly colored. In this case, the benefit of the antistatic UHMWPE of the present invention is that the normally "white" antistatic UHMWPE can be effectively colored in a high variety of colors and shades of color (depth of color; "hues") without the color being influenced by coloration due to the antistat. This is not possible, for example, with gray, dark gray, black, or yellow/orange starting materials. Thus, the antistat UHMWPE of the subject invention should be white or near white in the absence of incorporation of dyes and/or pigments.

The antistat agent is preferably compatible with the UHMWPE matrix in which it will be incorporated. By "compatible" is meant that the propensity of the antistat to form separate domains in the UHMWPE product, *i.e.* a separate phase, or to migrate excessively to the surface to provide a greasy surface or one whose surface concentration of antistat prohibits contact with food or other products under current governmental regulations is not exceeded. Most preferably, the antistat is non-migratory, e.g., is a permanent antistat. Most preferably, the antistat is at least partially soluble in the UHMWPE at processing conditions, e.g. during the gel stage of consolidation. Most preferably, regardless of their permanent or migratory nature, the antistats preferably meet FDA approval at levels of at least up to 10 weight percent, and also meet NFPA-99 standards for medical packaging at up to 50% relative humidity.

Testing of a particular organic antistat to ascertain its effectiveness as an antistat in UHMWPE can be accomplished without undue experimentation. For example, the antistat may be added and homogenously blended with UHMWPE powder, for example alone, optionally in the melt, or as a master batch, and ram extruded into, e.g. a rectangular cross-section bar or sheet stock and cut into plaques for measuring antistatic properties. Consecutive runs of various antistats can be accomplished on a single ram extrusion machine, preferably with non-antistat-containing UHMWPE being produced in between trials to "flush" the machine of traces of the prior antistat tested. The machine need not be disassembled and cleaned between successive tests, although this is possible.

Once test plaques have been prepared, they may be tested for surface resistivity by routine tests, for example ANSI EOS-ESD S11.11. The tests may be conducted at various relative humidity levels, e.g. at 20% and 50% relative humidity, preferably at room temperature. A further qualitative test is the ability of a charged sample produced by rubbing with wool or other cloth to attract paper pieces. For this test, standard copy paper cut into shapes of approximately 5 mm by 5 mm may be used. Static decay time can be measured by Federal Test Standard 101C, Method 4046. The static decay time is preferably less than 0.05s, more preferably less than 0.03s. Durability of the antistatic properties may be assessed by repeating these tests periodically over time.

Preferred organic antistats are light colored organic compounds which are preferably clear and colorless or light colored when liquid, melted, or in solution, or white in solid form, for example in powder form, or at least not highly colored. Some light coloration, such as gray, light yellow, light orange, light blue, pink, etc. is generally acceptable, as upon dilution into the UHMWPE matrix, this minor coloration will be reduced significantly. The color and color depth of the raw material antistat is not as important as the color of the final antistat UHMWPE product, and color should be assessed on this basis. By the term "substantially white" is meant but a minor departure from being visually white, i.e. a color which one would not describe by using color terms such as light gray or beige.

The organic antistats must not develop high coloration under the conditions of ram extrusion or compression molding, which generally requires temperatures in the range of 150° C to 260° C, more preferably 175° C to 205° C. Temperature alone is not decisive, as the dwell time at this temperature is important as well. Batch processes, for example, as well as products having large cross-sectional areas produced by ram extrusion, require longer high temperature dwell times. Suitability in this respect is best assessed by mixing the antistat to be tested with UHMWPE powder and any other additives, but free of pigments and/or dyes, compressing to some extent to ensure uniform contact, and placing in an oven at the temperature expected for consolidation, for the time period expected during consolidation. Suitable antistats will not cause appreciable coloration under these conditions, and will appear white or nearly white. The antistats may also be tested during actual ram extrusion conditions, as described earlier, or under compression molding conditions, preferably in lab scale quantities.

Among the organic antistats which are useful are alkyl esters of fatty acids, fatty acid esters of diols and polyols such as ethylene glycol, glycerine, sorbitol, sorbitan, etc., alkylamides of fatty acids, fatty amines, fatty alcohols, polyoxalkylene polyethers, polyoxyalkylene polyether sulfonates, carboxylates, phosphonates, or amides, polyoxyalkylated diglycolic acids, sulfated vegetable fatty acid esters, mono- and diorganophthalates, etc. The organic antistats may contain a quaternary ammonium phosphonium, or sulfonium group, although this is not preferred; if they do contain such groups, the antistats must not decompose to colored products at processing temperatures.

In general, the fatty portion of the preceding organic antistats may contain a C₆-C₃₀, more preferably a C₈-C₂₀, and most preferably a C₁₂-C₁₈ fatty (hydrocarbon) group. This fatty group may be saturated, monounsaturated, diunsaturated, or polyunsaturated. The unsaturation may be in cis or trans form, preferably cis form. The alkyl groups of the esters and amides may be C₁-C₂₀ hydrocarbons, more preferably C₁-C₆ hydrocarbons, and yet more preferably C₁-C₄ hydrocarbons. Examples include methyl, ethyl, propyl, butyl, 2-ethylhexyl, vinyl, propenyl, isopropenyl, and propargyl. Methyl groups are preferred.

The polyoxyalkylene groups may be homopolymeric polyoxyethylene, polyoxyproplene, or polyoxybutylene, or may be copolymeric, for example containing oxyethylene and oxypropylene units in block form, random form, or block/random form the number of oxyalkylene groups may range from 2 to 500, more preferably 4 to 100, and most preferably 8 to 40.

Also suitable are copolymers containing oxyalkylene groups and alkylene groups, in block form, which is preferred, or in random or block/random form. An example of such an antistat is GRAFE A5469, available from GRAFE Additiv Batch GmbH, 99444 Blankenhain, Federal Republic of Germany.

Also suitable are polyvinyl alcohols and partially hydrolyzed polyvinyl acetates, optionally containing copolymerized ethylene, propylene, or other vinyl esters such as those available as VeoVa® vinyl esters from Resolution Performance Products, optionally with copolymerized (meth)acrylic acid, (meth)acrylates, crotonic acid, and other neutral and charged copolymerizable monomers such as those containing amine or amide groups. Acetal groups may also be present, and their presence may increase the thermal stability of fully or partially hydrolyzed polyvinyl alcohols.

Preferred antistats are unsaturated fatty acids and their salts and esters. Methyl cis-9-octadecenoate, CAS 112-62-9 is a most preferred antistat. Methyl esters of other unsaturated fatty acids are also preferred. Palm stearin is also effective, if cryogenically ground or otherwise reduced to very fine particle size.

It has been very surprisingly and unexpectedly discovered that the antistatic behavior of the majority of antistats in UHMWPE is surprisingly enhanced by fine grinding, preferably cryogenic grinding. Ordinary methods of pulverization are generally impractical or insufficient. Cryogenic grinding is well known as a method of reducing particle size of ordinarily deformable materials such as organic compounds, waxes, polymers, etc. The very fine particle sizes obtained produce a surprising improvement in antistatic properties, and this is the case regardless of whether the particular compound being investigated for its antistatic properties exhibits antistatic behavior in other forms or not.

For example, methyl-cis-9-octadecenoate, a preferred antistatic agent, has antistatic properties when added to UHMWPE prior to consolidation in granular or molten form, but these properties are highly elevated when cryogenically ground. GRAFE A5469, a polyoxyethylene/ethylene copolymer touted as an antistat for use in other polymer systems, fails to be effective in UHMWPE unless reduced to very fine particle size.

The fine grinding should preferably result in a product with a weight average, particle size of less than 600 µm, more preferably less than 400 µm, still more preferably less than 200 µm, yet more preferably less than 125µm, and most preferably less than 100 µm. For methyl-cis-9-octadecenoate, for example, cryogenic grinding is able to produce a particle size distribution such that, in terms of a particle weight, 59% > 63 µm, 38% > 90 µm, and 16% > 125 µm

While cryogenic grinding is one method of producing very fine particle size antistats, other methods may be used as well. For example, molten antistat may be dispersed into a non-solvent or into a solvent in which the antistat is only sparingly soluble under high shear, for example with a rotor stator mixture such as those available from IKA under the trademark ULTRA-TURRAX^{©} mixers. The continuous liquid phase and antistat preferably are initially at a temperature about the melting point of the antistat, and following preparation of a fine dispersion of the desired particle size, the mixture is cooled without substantial agglomeration of the particles. For antistats with melting points below 100° C, water can advantageously be used as the liquid continuous phase. Surfactants may be added to aid in emulsification and to prevent coalescence of the fine, dispersed phase particles. In some cases, the surfactant may remain in the antistat, which is advantageously separated from the liquid continuous phase by well-known techniques such as centrifugation, filtration, freeze drying, spray drying, etc. In other cases, the antistat particles may be washed with liquid which removes the surfactant. In lieu of a surfactant, a protective colloid such as partially or fully hydrolyzed polyvinyl alcohol can be used. Common surfactants (emulsifiers) include the various polyoxyalkylene nonionic surfactants available in the marketplace as Igepal^{®}, Pluronic^{®}, Tetronic^{®}, Tween^{®}, Span^{®}, Tergitol^{®}, etc. Anionic, cationic, and ampholytic surfactants may also be used, and these are well known in the dispersions art, as are also other protective colloids, including natural protective colloids based on animal or vegetable sources such as starch and casein. If the emulsifier and/or protective colloid or a substantial portion thereof is to be left in the antistat powder product, these must not interfere with production of the UHMWPE product, in particular with regard to discoloration, and preferably should also be acceptable, in the quantitive employed, in the food processing and medical industries.

Precipitation methods may also be used to create micron sized antistat particles. In one such method, for example, the antistat is dissolved in solvent, and this solvent is then gradually diluted with a miscible non-solvent to cause precipitation. Agitation, preferably vigorous agitation, preferably accompanies precipitation, and surfactants and protective colloids may be employed as well. Solvent exchange, where a volatile solvent is removed by distillation, often at reduced pressure, while a less volatile solvent is added, is also suitable. It should be noted that when fine particle production is produced by this or the former method or by other methods involving intense agitation, the surfactants and protective colloids used should be low-foaming or non-foaming surfactants and/or protective colloids, or a foam suppressor such as a polyorganosiloxane or a polyether-functionalized polyorganosiloxane should be added. Other foam suppressors are also available and well known to the skilled artisan.

The fine particle sizes may be produced by other techniques as well. For example, a solution of antistat may contact a rapidly spinning disk in a spray dryer, or may be injected into the spray drier in finely atomized form. The particular manner of preparing the fine particle size is not important. It is noted that in many of these techniques, UHMWPE particles can also be added and in this case, the product isolated will be a pulverulent master batch containing both UHMWPE particles and antistat particles. The UHMWPE and antistat may exist as wholly separate particles, as UHMWPE particles bearing antistat on their surface, or vice versa, or as small agglomerates.

When adding the antistat to UHMWPE powder prior to consolidation in the form of a masterbatch, a "carrier" which is not UHMWPE may be used. The carrier may be an inorganic substance such as titania, which may confer additional antistatic properties, silica, alumina, ceria, *etc.,* and in such cases the carrier may be a pulverized natural product, or preferably, is produced in fine colloidal form by precipitation methods, or may be produced pyrogenically, i.e. fumed silica, titania, or alumina. When the carrier is an organic polymer, the polymer may be present in simple admixture with the antistat in finely divided form, or the antistat may be contained in the polymer in dispersed form or as a solution of antistat in the polymer. In such cases, for example, the masterbatch may be made by combining the antistat and polymer in softened or molten form in a mixer such as a sigma blade mixer, or compounded in an extruder. The masterbatch product in such cases is preferably finely ground prior to addition to the UHMWPE and subsequent consolidation, more preferably cryogenically ground. Carrier polymers should preferably be compatible with the UHMWPE. Polymers most compatible are non-polar polymers such polyethylenes, polypropylenes, polybutenes and the like, but polyoxymethylenes and other polymers may be used as well. It is important that the polymer be stable under UHMWPE consolidation conditions. Moreover, since a significant application area of the consolidated products is in the food and medical industries, it is preferable that the carrier polymer be approved for such uses.

Following reduction to fine particle size, or in the case of antistats where this is not necessary, the antistat, either as such or as a master batch with UHMWPE powder and/or other ingredients, is added in the appropriate amount to the UHMWPE raw material powder, and ram extruded or compression molded under conventional conditions. If panels are to be formed, ram extrusion preferably takes place as disclosed in U.S. 7,803,450. By the term "consolidated UHMWPE product" is meant a UHMWPE polymer product consolidated by conventional UHMWPE molding techniques such as ram extrusion or compression molding.

It is also necessary, when evaluating antistats, to ensure that the antistat does not impair the consolidation of the UHMWPE product. This product, for example, should be homogeneous and free of porosity.

### Examples

Conventional compression consolidation was used to produce 200 mm × 200 mm × 7.62 mm test plaques for resistivity measurement. The particular additives were tested as received, or in the case of solids, optionally after cryogenic grinding. The additives were thoroughly blended with the starting UHMWPE powder, either in liquid form, neat solid form, or in the form of a masterbatch. Plaques containing various loadings of additives were tested for resistivity by ANSI EOS-ESD S11.11. In addition, the quality of the plaques were assessed visually. The results are presented in Table 1 below.

**Table 1**

| **Example** | **Additive** | **Loading (%)** | **Chemistry** | **Resistivity** | **Result** |
|---|---|---|---|---|---|
| C1 | PCC Maxomer AS-1018/75¹ | | Fatty acid ester | 10⁸-10⁹ Ω/square* | No melt in center of part |
| C2 | Atmer 129² | | Glycerol Ester | >10¹² Ω /square | Resistivity too high |
| C3 | Dupont AS MK400³ | | | >10¹² Ω /square | Resistivity too high |
| C4 | Dupont AS SD 100⁴ | | | >10¹² Ω /square | Resistivity too high |
| C5 | Dow D9000.05⁵ | | | >10¹² Ω /square | Resistivity too high |
| C6 | Dow D9007.15⁵ | | | >10¹² Ω /square | Resistivity too high |
| C7 | Dow D9100.05⁵ | | | >10¹² Ω /square | Resistivity too high |
| C8 | Dow D9107.10⁵ | | | >10¹² Ω /square | Resistivity too high |
| C9 | Ciba Irgastat P16 | 10.0 | Polyetherpolyolefin block copolymer | >10¹² Ω /square | Particles were too large-Grinding helped improve resistivity - Resistivity was still too high |
| 1 | Chemstat 1880 solid⁶ | 5.0 | Fatty acid ester | 4.5x10⁹ Ω /square | Acceptable |
| 2 | Chemstat 1880 solid | 2.5 | Fatty acid ester | 3.8x10⁹ Ω /square | Acceptable |
| 3 | Chemstat 1860 liquid | 3.0 | Ethoxylated amide | 4.2x10⁸ Ω /square | Acceptable |
| 4 | Chemstat 1890 liquid | 10.0 | Fatty acid ester | 5.0x10⁸ Ω /square | Acceptable |
| 5 | Chemstat 1890 liquid | 2.5 | Fatty acid ester | 4.Sx10⁸ Ω /square | Acceptable |
| 6 | Chemstat 1890 liquid | 5.0 | Fatty acid ester | 3.4x10⁸ Ω /square | Acceptable |
| 7 | Chemstat 1890 liquid | 1.0 | Fatty acid ester | 4.4x10⁸ Ω /square | Acceptable |
| 8 | Graf AS 5469-PR⁷ | 10.0 | Polyether-polyolefin block copolymer | 3.0x10⁸ Ω /square | Acceptable |
| 9 | Graf AS 5469-PR | 5.0 | Polyetherpolyolefin block copolymer | 4.1X10⁸ Ω /square | Acceptable |
| 10 | Graf AS 5469-PR | 2.5 | Polyetherpolyolefin block copolymer | 4.4x10⁸ Ω /square | Acceptable |

| | | | | | |
|---|---|---|---|---|---|
| ¹ Antistat available from PCC Chemax, Inc. ²Glycerol ester antistat available from CRODA ³Entira™ AS MK400 antistat available from DuPont, a blend of ethylene acrylate copolymer and ethylene copolymer, partial potassium salt. ⁴Entira™ SD100 is an ionomer antistat available from DuPont ⁵Antistats available from Dow. ⁶Antistats available from PCC Chemax, Inc. | | | | | |

In Comparative Example C1, antistatic behavior was acceptable, but porosity in the center of the part is problematic. In Comparative Examples C2 to C9, the resistivity is too high. In Examples 1 to 10, both low resistance and good processing behavior was noted. In each case, the UHMWPE product appeared visually white.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. An antistatic UHMWPE consolidated product having a resistivity of less than 1·1¹¹Ω/square, comprising UHMWPE and at least one organic antistat, said organic antistat, when blended with UHMWPE powder and subsequently consolidated, providing a substantially white UHMWPE product in the absence of dyes and pigments.

2. The antistatic consolidated UHMWPE product of claim 1, which contains about 1 to about 50 weight percent of said organic antistat.

3. The antistatic consolidated UHMWPE product of claim 1, which is visually white in the absence of dyes and/or pigments.

4. The antistatic consolidated UHMWPE product of claim 1, which has a surface resistivity ≥ 1⁰5 Ω/square and ≤ 10¹⁰ Ω/square.

5. The antistatic consolidated UHMWPE product of claim 1, which complies with EU and FDA regulations for food contact.

6. The antistatic consolidated UHMWPE product of claim 1, wherein the organic antistat is blended into UHMWPE powder prior to consolidation in the form of a master batch.

7. The antistatic consolidated UHMWPE product of claim 1, wherein the organic antistat has a weight average mean particle size of less than 600µm, preferably less than than 400µm and more preferably less than 200µm.

8. The antistatic consolidated UHMWPE product of claim 1, wherein the organic antistat is cryogenically ground prior to blending with UHMWPE powder and consolidated.

9. The antistatic consolidated UHMWPE product of claim 1, wherein the organic antistat comprises one or more fatty acid alkyl esters, fatty acid amides, or polyolefin-polyoxyalkylene copolymers.

10. The antistatic consolidated UHMWPE product of claim 1, wherein at least one organic antistat consists of an unsaturated fatty acid alkyl ester.

11. The antistatic consolidated UHMWPE product of claim 1, wherein the antistat comprises methyl cis-9-octadecenoate.

12. The antistatic consolidated UHMWPE product of claim 1, further containing an inorganic antistat.

13. An antistatic consolidated UHMWPE product having a surface resistivity of < 10¹¹ Ω/square, comprising a consolidated blend of UHMWPE powder and at least one cryogenically ground organic antistat.

14. The antistatic consolidated UHMWPE product of claim 13, wherein the antistatic consolidated UHMPE product exhibits a resistivity of about 10¹² Ω/square or more following consolidation, when the organic antistat is not cryogenically ground.

15. A method for improving the antistatic properties of an antistatic consolidated UHMWPE product containing an organic antistat, comprising cryogenically grinding the organic antistat, blending the cryogenically ground organic antistat with UHMWPE powder and optionally further additives to form a UHMWPE and antistat-containing blend, and consolidating the UHMWPE and antistat-containing blend under heat and pressure to form a light colored antistatic consolidated UHMWPE product.
